(19) Europäisches Patentamt

European Patent Office

Office européen des brevets

(11) **EP 0 995 783 B1**

(12) **EUROPÄISCHE PATENTSCHRIFT**

(45) Veröffentlichungstag und Bekanntmachung des Hinweises auf die Patenterteilung:
**14.12.2005  Patentblatt 2005/50**

(51) Int Cl.⁷: **C09J 7/04**, D04H 1/48

(21) Anmeldenummer: **99119112.3**

(22) Anmeldetag: **04.10.1999**

(54) **Verwendung eines Klebebands auf Basis eines mittels Bindemittel verfestigten Vlieses**

Use of an adhesive tape based on a non-woven substrate consolidated by a bonding agent

Utilisation d'un ruban adhésif à base d'un non-tissé renforcé par un liant

(84) Benannte Vertragsstaaten:
**AT BE CH CY DE DK ES FI FR GB GR IE IT LI LU MC NL PT SE**

(30) Priorität: **24.10.1998  DE 19849052**
**08.05.1999  DE 19921408**
**07.08.1999  DE 19937446**

(43) Veröffentlichungstag der Anmeldung:
**26.04.2000  Patentblatt 2000/17**

(73) Patentinhaber: **tesa AG**
**20253 Hamburg (DE)**

(72) Erfinder:
• **Külper, Klaus, Dr.**
**25421 Pinneberg (DE)**
• **Ganschow, Frank**
**25368 Kiebitzreihe (DE)**

(56) Entgegenhaltungen:
**EP-A- 0 452 594          EP-A- 0 829 222**
**DE-U- 29 804 431       US-A- 5 631 073**

## Beschreibung

Die Erfindung bezieht sich auf die Verwendung eines Klebebands mit einem bandförmigen Träger aus einem naß gelegten oder mechanisch vorverfestigten und zusätzlich mit einem chemischen Bindemittel adhäsiv verfestigten Vliesmaterial, das zumindest einseitig mit einem Kleber beschichtet ist.

Klebebänder mit einem bandförmigen Träger auf Gewebe- oder Nähvliesbasis sind bekannt, wobei Gewebebänder schon seit längerer Zeit erhältlich sind und Bänder mit einem Nähvliesträger beispielsweise in der DE 94 01 037 U1 beschrieben werden. Als Klebebeschichtung werden bevorzugt druckempfindliche Haftklebebeschichtungen eingesetzt.

Die DE 44 42 092 C1 beschreibt solch ein Klebeband auf Nähvliesbasis, das auf der Trägerrückseite beschichtet ist. Der DE 44 42 093 C1 liegt auch die Verwendung eines Vlieses als Träger für ein Klebeband zugrunde, hier wird ein durch die Bildung von Maschen aus den Fasern des Vlieses verstärktes Querfaservlies beschrieben, also ein dem Fachmann unter dem Namen Malivlies bekanntes Vlies. Die DE 44 42 507 C1 offenbart ebenfalls ein Klebeband zur Kabelbandagierung, jedoch basiert es auf sogenannten Kunit- beziehungsweise Multiknitvliesen.

Aus der DE 195 23 494 C2 ist die Verwendung eines Klebebandes mit einem Träger aus Vliesmaterial zum Bandagieren von Kabelbäumen bekannt, das einseitig mit einem Kleber beschichtet ist. Bei dem erfindungsgemäß zum Einsatz kommenden Vlies handelt es sich um ein Spinnvlies aus Polypropylen, das mit Hilfe eines Kalanders thermisch verfestigt und geprägt ist, wobei die Prägewalze eine Prägefläche von 10 % bis 30 %, bevorzugt 19 %, aufweist.

Mit der DE 298 04 431 U1 wird ebenfalls die Verwendung eines Klebebandes mit einem Träger aus Vliesmaterial zum Bandagieren von Kabelbäumen offenbart, wobei das vorgeschlagene Spinnvlies aus Polyester besteht.

Aus der DE 298 19 014 U1 sind Klebebänder auf Basis eines mit Luft- und/oder Wasserstrahlen verfestigten Vliesen bekannt. Nachteil dieser Träger ist, trotz der mechanischen Verfestigung, daß durch diese Technik ein Ausziehen einzelner langer Fäden und die negative Beeinflussung der klebtechnischen Eigenschaften nicht ausgeschlossen werden kann. Bei sehr starker Verfestigung der Einzelfasern können andere vorteilhafte Trägereigenschaften speziell für die Bündelung von Kabeln in Automobilen nicht mehr erhalten werden.

In WO 99/24518 A1 wird ein Klebeband beschrieben, wobei das Trägermaterial ein Vlies ist, das erst durch die spezifische Auswahl von Fasern oder Filamenten mit einer Feinheit von größer 15 denier sowie durch eine zusätzlich aufextrudierte Folienschicht eine Eignung für die Verwendung von Klebebändern findet. Nachteilig für die Nutzung ist nicht nur die zusätzlich notwendige Extrusionsbeschichtung, sondern auch besonders die Einschränkung auf sehr dickes Fasermaterial ergibt ein grobes Vlies, das den typisch weichen, textilen Charakter vermissen läßt. Denier ist eine in der Textilindustrie übliche, aus Frankreich stammende Einheit für den Titer (Feinheit) von Garnen. Die Einheit ergibt sich aus der Gleichung:

$$\text{Titer} = \frac{\text{Fadenmasse}}{\text{Fadenlänge}}$$

Klebebänder mit einem Gewebeträger genügen hohen technischen Anforderungen, sind aber aufgrund der geringen Produktivität des Webprozesses aufwendig herzustellen, teuer und neigen zum Durchschlagen der Klebmasse. Klebebänder mit Nähvliesträger haben zwar einen einfachen Aufbau, zeigen aber erhebliche Nachteile in der praktischen Anwendung, wie Probleme aufgrund des heterogenen Vliesaufbaus mit verstärkenden Parallelnähten. Des weiteren ist auch die Produktionsgeschwindigkeit dieser Herstelltechnologie selbst mit modernen Hochleistungsanlagen beschränkt.

Des weiteren ist bei einem einseitig klebend ausgerüsteten Klebeband mit einem herkömmlichen Malivlies als Trägermaterial, also einem nicht zusätzlich fixierten Malivlies, eine Behandlung der Rückseite notwendig, um ein Delaminieren des Trägers und/oder ein Herausreißen von einzelnen Fasern oder Faserbüscheln aus der Oberfläche insbesondere beim Abrollen von der Rolle zu verhindern. Alternativ kann dieses Ziel erreicht werden, indem während des Wickelvorganges der Klebebandrolle ein Trennpapier zwischen die einzelnen Klebebandlagen eingeführt wird, was jedoch unerwünscht ist für den Hersteller wegen des zusätzlichen Kostenfaktors und für den Anwender wegen Entsorgungs- und Handlingsproblemen, ganz abgesehen davon, daß silikonisierte Trennpapiere speziell in Lackierbereichen tunlichst gemieden werden.

Auch bei genähten oder anders mechanisch verfestigten Vliesen (Nadelvliese beziehungsweise luft- und/oder wasserstrahlverfestigte Vliese) sind die Einzeifasern des Vlieses unter Umständen immer noch gegeneinander verschiebbar und können bei Belastungen einzeln ausgerissen werden. Dies gilt sowohl für Fasern in dem bahnförmigen Träger als auch ganz besonders für Fasern in den Oberflächen. Extrem aufwendig und ökonomisch kaum vertretbar ist der Weg, eine derartige Verfestigung eventuell durch mehrmaliges Durchlaufen des Verfestigungsprozesses soweit zu führen, daß der Faserverbund nicht mehr delaminiert - hierbei würden jedoch unweigerlich gewünschte Eigenschaften wie Handeinreißbarkeit, textiler Charakter, Dämpfungseigenschaften etc. verloren gehen.

Verabsäumt man also hier im Herstellprozeß des Trägers und/oder des Klebebands, zusätzliche Verbesserungen sicherzustellen, so beeinflussen die während des Abrollens der Klebebandrolle ausgerissenen Fasern die klebtechnischen Eigenschaften des Klebebandes deutlich negativ. Sie sorgen für eine schlechte Optik, wenn sie nicht sogar die gesamte Funktionsfähigkeit des Klebebandes zerstören.

Die US 5,631,073 A beschreibt ein Trägermaterial, das bevorzugt für medizinische Zwecke Verwendung finden soll. Es werden zur Herstellung des Vlieses Stapelfasern und Bindefasem eingesetzt, die in einem Folgeschritt geprägt werden. Darüber hinaus erfolgt der Einsatz von chemischen Bindemitteln. Die Verwendung von chemischen Bindemitteln ist nicht vorgesehen.

Durch das thermische Prägen von bestimmten Geometrien unter Anwendung von Druck sowie anschließendes Imprägnieren mit chemischen Bindemitteln und/ oder zusätzlicher Verfestigung mittels Wasserstrahlen oder Vemadelungstechnik wird eine gute Handeinreißbarkeit in Querrichtung sowie ausreichende Trocken- und Nassfestigkeiten für medizinische Anwendungen erreicht.

Aber es werden die Hohlräume in dem Vlies aus Stapelfasern und Bindefasem durch den Prägevorgang (unter Druck und Temperatur) verdichtet und darüber hinaus zusätzlich die verbliebenen Hohlräume durch Polymerdispersionen gefüllt. Das Trägermaterial ähnelt damit einer geschlossenen Kunststofffolie, die keinerlei Dämpfungseigenschaften aufweist, da sie zu kompakt ist.

Somit liegt der vorliegenden Erfindung die Aufgabe zugrunde, ein Klebeband so zu verbessern, daß die Nachteile des Standes der Technik nicht oder zumindest nicht in dem Umfang auftreten. Gelöst wird diese Aufgabe durch die Verwendung eines Klebebands, wie es im Hauptanspruch niedergelegt ist. Gegenstand der Unteransprüche sind dabei vorteilhafte Weiterbildungen des Klebebands.

Demgemäß betrifft die Erfindung die Verwendung eines Klebebands zum Bandagieren von Kabelbäumen, wie sie insbesondere in der Automobilindustrie eingesetzt werden, mit einem bandförmigen Träger aus Vliesmaterial, das zumindest einseitig mit einem Kleber beschichtet ist, wobei das Rohvlies ein Faservlies darstellt, das im ersten Schritt durch mechanische Bearbeitung verfestigt wird, zum Beispiel durch die Bildung von Maschen aus Fasern des Vlieses oder durch Nadelung, Vernähung beziehungsweise Luft- oder Wasserstrahlbearbeitung, oder aber ein Naßvlies ist, das hydrodynamisch gelegt wurde. Dieses Vorprodukt erfährt dann eine zusätzliche Verfestigung auf adhäsive Weise durch zugegebenes Bindemittel.

Vorverfestigte Vliese werden beispielsweise auf Nähwirkmaschinen des Typs "Mativties" der Firma Karl Meyer, ehemals Malimo, hergestellt und sind unter anderem bei den Firmen Naue Fasertechnik und Techtex GmbH beziehbar. Ein Malivlies ist dadurch gekennzeichnet, daß ein Querfaservlies durch die Bildung von Maschen aus Fasern des Vlieses verfestigt wird.

Als Träger kann weiterhin ein Vlies vom Typ Kunitvlies oder Multiknitvlies verwendet werden. Ein Kunitvlies ist dadurch gekennzeichnet, daß es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, daß es als Längsfaservlies in Längsrichtung hohe Zugkräfte aufnehmen kann. Ein Multiknitvlies ist gegenüber dem Kunitvlies dadurch gekennzeichnet, daß das Vlies durch das beidseitige Durchstechen mit Nadeln sowohl auf der Ober- als auch auf der Unterseite eine Verfestigung erfährt.

Schließlich sind auch Nähvliese als Vorprodukt geeignet, ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Als Ausgangsmaterialien für den textilen Träger sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Bevorzugt bestehen die Grundfasern des Vlieses aus Polyester-Frisch- oder Polyester-Reißfasern. Besonders geeignet sind Fasern mit einer Faserlänge zwischen 10 und 100 mm sowie einer Faserstärke von 1,5 bis 10 dtex.

Während andere textile Flächengebilde durch Verweben oder Vermaschen von Garnen oder Zwirnen die Verbundfestigkeit erhalten, sind bei technischen Vliesen aus kurzen Fasern die Faser-Faser-Haftkräfte zu schwach, um diese als Trägermaterialien für technische Klebebänder zu verwenden, für die sowohl in Maschinenlaufrichtung als auch in der Z-Richtung (senkrecht zur Vliesfläche) Mindestfestigkeiten gewährleistet sein müssen, um sowohl die Verarbeitbarkeit bei der Klebebandherstellung als auch bei der Endanwendung sicherzustellen. Unverfestigte Vliese sind für normale Klebebandanwendungen nicht oder höchst eingeschränkt einsetzbar.

Als Verfestigungsmethoden sind für Vliese die mechanische, die thermische sowie die chemische Verfestigung bekannt. Seit einigen Jahren werden mechanische Verfestigungsmethoden eingesetzt, um Trägermaterialien für Klebebänder herzustellen. Bekannt ist hier besonders ein Nähvlies, das aus einer Vielzahl parallel zueinander verlaufender Nähte gebildet wird, wobei bekanntermaßen die Nähwirktechnik bei der notwendigen Verfestigung ein langsames, nur gering produktives Verfahren darstellt und der benötigte Nähfaden zusätzliche Probleme mit sich bringen kann.

Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozeßführung ausschließlich oder zumindest überwiegend auf Faserknotenpunkte beschränken, so daß unter Erhalt der lockeren, offenen Struktur im Vlies trotzdem ein stabiles, dreidimensionales Netzwerk gebildet wird.

Für die Nutzung von Vliesen als Trägermaterial für Klebebänder ist besonders die adhäsive Verfestigung von mechanisch vorverfestigten oder naßgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemittel oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u. ä. sowie deren Copolymere. Im Normalfall handelt es dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik" (Arbeitgeberkreis Gesamttextil, Eschbom, 1996) nachzulesen.

Für mechanisch vorverfestigte Vliese, die bereits eine ausreichende Verbundfestigkeit aufweisen, bietet sich der einseitige Sprühauftrag eines Bindemittels an, um das problematische Ausreißen von Einzelfasern aus der Oberfläche bei der Anwendung für Klebebänder zu reduzieren - die adhäsive Wirkung des Bindemittels tritt verstärkt nur dort auf, wo diese Eigenschaftsverbesserung gefordert ist, nämlich auf der Trägeroberseite. Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleibt, kann eine unerwünschte Verhärtung und Versteifung des Vlieses weitgehend verhindert werden.

Für eine ausreichende adhäsive Verfestigung des Vliesträgers ist im allgemeinen Bindemittel in der Größenordnung von 3 % bis 50 %, insbesondere 5 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozeßschritt erfolgen, wobei dieser in-line oder off-line durchgeführt werden kann. Nach der Bindemittelzugabe muß temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, daß das Bindemittel nach Ende des Vlies-Herstellprozesses seine Klebrigkeit verloren hat. Vorteilhaft ist, daß durch thermische Behandlung flüchtige Komponenten wie Faserhilfstoffe entfernt werden und somit ein Vlies mit günstigen Foggingwerten entsteht, so daß bei Einsatz einer foggingarmen Klebemasse ein Klebeband mit besonders günstigen Foggingwerten produziert werden kann.

Eine weitere Sonderform der adhäsiven Verfestigung besteht darin, daß die Aktivierung des Bindemittels durch Anlösen oder Anquellen erfolgt. Prinzipiell können hierbei auch die Fasern selbst oder zugemischte Spezialfasem die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt. Selbiges gilt auch für das *Eisenhut-Verfahren* zur Verfestigung von Viskose mit wäßriger Natronlauge. Dagegen hat das partielle Anlösen von Polyvinylakohol-Bindemitteln mit Wasser Vorteile, besonders bei der Herstellung von verfestigten Naßvliesen.

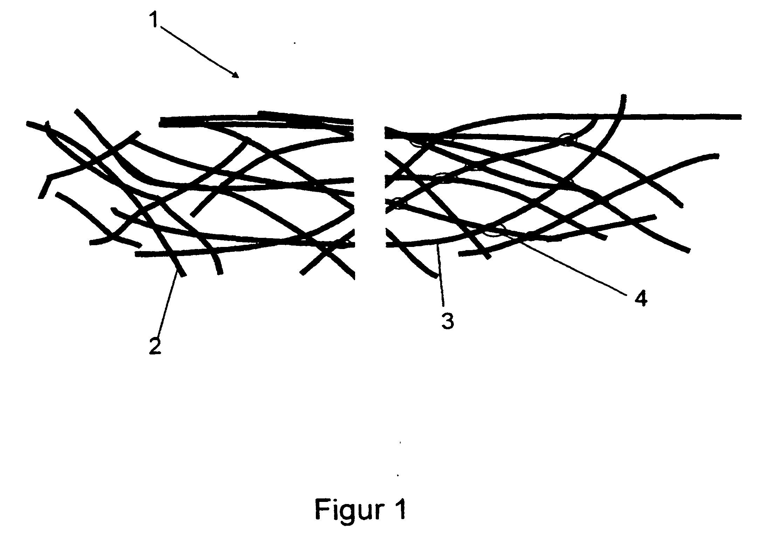

Die Figur 1 zeigt auf der linken Seite ein Vlies 1, dessen Fasern 2 mechanisch mittels Wasserstrahlen oder Nadeln verfestigt worden sind. Auf der rechten Seite ist ein Vlies 1 dargestellt, das eine zusätzliche adhäsive Verfestigung erhalten hat. Das Bindemittel 4 hat an den Berührungspunkten der Einzelfasern 3 dauerhafte Verknüpfungen gebildet, die auch bei normalen Zug- oder Druckbelastungen erhalten bleiben. Diese Verknüpfungen können wie in Figur 1 dargestellt einen Knoten bilden, jedoch sich auch in Form eines "Segels" über eine längere Faserlänge ausdehnen.

Durch die Art, den Anteil sowie die Verteilung des Bindemittels in dem Faservlies können neben der Delaminationsfestigkeit und Einbindung der Einzelfasern in den Vliesverbund auch die Eigenschaften wie Biegesteifigkeit, textiler Griff, Festigkeit, Dämpfungscharakter und Oberflächenstruktur, um nur einige zu nennen, beeinflußt werden.

Weitere Behandlungen wie Imprägnieren, Färben, Kalandrieren, Beschichten sowie die Herstellung von Verbundmaterialien mit anderen Trägem (Folien, Spinnvliesen, Gelegen, Geweben o.ä.) runden die Einsatzmöglichkeiten ab. Insbesondere durch eine gezielte Kalandrierung mit geprägten Walzen kann dem Vlies eine Struktur gegeben werden, die nicht nur spezielle Oberflächenstrukturen einzustellen erlaubt, sondern auch gegebenenfalls die Handeinreißbarkeit deutlich verbessert.

In einer bevorzugten Ausführungsform weist das Vlies die folgenden Eigenschaften auf:

- ein Vliesgewicht von 50 bis 500 g/m$^2$, insbesondere 80 bis 200 g/m$^2$,
- eine Vliesdicke von 100 bis 3000 $\mu$m, insbesondere 200 bis 1000 $\mu$m,
- eine Reißkraft von 75 bis 500 N/(5 cm), insbesondere 125 bis 250 N/(5 cm) und/oder
- eine Reißdehnung von 5 bis 100 %, insbesondere 15 bis 70 %.

Um dem Klebeband für den jeweiligen Einsatzzweck optimierte Eigenschaften zu geben, können dem Vliesträger während des Produktionsvorganges weitere Additive zugesetzt werden. Handelsübliche UV-Stabilisatoren erhöhen die Stabilität des Klebebandes gegenüber intensiver UV-Bestrahlung zum Beispiel durch die Sonne. Besonders hervorzuheben ist bei der Verwendung des Klebebandes zur Bandagierung von Kabelbäumen die Eigenschaft, daß bereits der Vliesträger durch den Zusatz von Flammschutzmitteln, bevorzugt Ammoniumpolyphosphat und/oder durch Auswahl geeigneter, schwer entflammbarer oder nicht brennbarer Fasern flammfest ist. Besonders vorteilhaft können zum Beispiel feste Flammschutzmittel in Bindemitteldispersionen eingetragen werden, wobei das Bindemittel nicht nur die adhäsive Faserfixierung leistet, sondern ebenso das Flammschutzmittel dauerhaft im Vlies bindet.

Durch den gezielten Einsatz farbigen Fasermaterials kann eine Vielzahl unterschiedlich farbiger Vliese gefertigt werden.

Weiter vorzugsweise ist der Vliesträger einseitig mit einer selbstklebenden Masse beschichtet, die insbesondere aus einer handelsüblichen druckempfindlichen Klebmasse auf Acrylat- oder Kautschukbasis bestehen kann.

Besonders vorteilhaft hat sich als Klebemasse eine solche auf Acrylathotmelt-Basis erwiesen, die einen K-Wert von mindestens 20 aufweist, insbesondere größer 30, erhältlich durch Aufkonzentrieren einer Lösung einer solchen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungsextruder bevorzugt.

Eine derartige Klebemasse ist in der deutschen Patentanmeldung DE 43 13 008 A1 dargelegt. Diesen auf diesem Wege hergestellten Acrylatmassen wird in einem Zwischenschritt das Lösungsmittel vollständig entzogen.

Zusätzlich werden dabei weitere leichtflüchtige Bestandteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist darin zu sehen, daß diese einen hohen K-Wert und damit ein hohes Molekulargewicht aufweisen. Dem Fachmann ist bekannt, daß sich Systeme mit höheren Molekulargewichten effizienter vemetzen lassen. Damit sinkt entsprechend der Anteil an flüchtigen Bestandteilen.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt. In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A1 beschrieben.

Die Klebemasse auf Acrylathotmelt-Basis kann aber auch chemisch vernetzt sein.

In einer besonders bevorzugten Ausführungsform werden als Selbstklebemassen Copolymerisate aus (Meth)acrylsäure und deren Estem mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethem eingesetzt.

Der Restlösungsmittel-Gehalt sollte unter 1 Gew.-% betragen.

Die Beschichtung der Klebeseite des Trägers, insbesondere mit einer selbstklebenden Beschichtung, erfolgt in üblicher Weise. Vorteilhaft ist die herkömmliche Durchführung der Beschichtung mit Streichbalken und Lösungsmittelmassen, besser aber erfolgt diese berührungslos oder fast berührungslos mittels Siebdrucktechnik (vergleiche DE 33 46 100 C2), wobei eine vollflächige oder auch segmentartige Kleberbeschichtung vorstellbar ist. Bezüglich der günstigsten Parameter wird ausdrücklich auf diese Patentschrift DE 33 46 100 C2 Bezug genommen, insbesondere zur Viskosität und Art des Klebers, zu den verwendeten Sieben, Bahngeschwindigkeiten und sonstigen Maßnahmen.

Aber auch die Transferbeschichtung, vorzugsweise mittels Rollstabdüsenauftragswerk, insbesondere für unterschiedlichste Hot-melt-Kleber, kann zur Anwendung kommen. Mit dieser Technologie ist die Beschichtung mit einer sehr geringen Klebmassemenge möglich. Dies kann von Vorteil sein, weil die ansonsten im Träger versinkende Klebemasse nicht nur eine Materialvergeudung darstellt, sondern sogar einen negativen Einfluß auf die Dämpfungseigenschaften des Klebebandes bei der Anwendung hat.

Wenn nur eine einseitige Beschichtung vorgesehen ist, erfolgt diese im Falle eines genähten Vlieses insbesondere auf die rauhere, faserige Seite, weil dies die Verankerung der Klebmasse auf dem Vlies fördert und gleichzeitig ein leichteres Abrollen von einer spiralförmigen Rolle erreicht wird.

Je nach angestrebten Verwendungen kann neben der Klebebeschichtung eine antiadhäsive Ausrüstung der Rückseite des Vliesträgers hinzukommen. Diese zusätzliche Beschichtung der zweiten Trägerseite kann mit filmbildenden Polymeren, insbesondere mit Acrylatlack erfolgen oder eine Kombination aus Schaum beziehungsweise Paste und Lack darstellen. Bei speziellen Anwendungsfällen wie zum Beispiel bei der Umwicklung von Kabelbäumen kann auf eine Beschichtung der Rückseite des Klebebandes ganz verzichtet werden.

Durch den erfindungsgemäßen Einsatz des Bindemittels bei der Herstellung des Vlieses kommt es zu einer deutlichen Verfestigung des Materials in "z-Richtung", ohne den Dämpfungseffekt des damit hergestellten Klebebands negativ zu beeinflussen.

Nach der adhäsiven Verfestigung des Vlieses sind Berührungspunkte der Einzelfasern im Verbund fest miteinander verschmolzen, so daß beim Abrollen von der Rolle kein Spalten des Vlieses auftritt. Da auch die Einzelfasern an der Oberfläche dergestalt gebunden sind, findet ein Ausreißen dieser Fasern nicht oder zumindest nur stark eingeschränkt statt.

Das Klebeband weist eine hervorragende Dämpfungseigenschaft auf. Diese ist auf den besonderen Aufbau des Vlieses zurückzuführen: ein hoher Anteil Luft, eingeschlossen in dem dreidimensionalen Netzwerk, ist in der Lage, äußere Erschütterungen sehr gut abzufedern. Eine erfindungsgemäße Ummantelung aus dem Klebeband weist demnach innerhalb der einzelnen Umwicklungen eine hohe Flexibilität auf, die sich ebenfalls positiv auf die Dämpfungseigenschaften auswirkt.

Das Klebeband wird nachfolgend in seiner Herstellung in beispielhafter Ausführung beschrieben, ohne damit die Erfindung in irgendeiner Weise beschränken zu wollen.

### Beispiel 1

In ein Faservlies vom Typ "Malivlies", bestehend aus Polyesterfasern einer Feinheit von 3,3 dtex, einer Faserlänge von 60 bis 80 mm und mit einem Flächengewicht von 150 g/m$^2$, wird feines Bindepulver

gleichmäßig verteilt, zum Beispiel durch Einrütteln oder mittels elektrostatischer Sprühpistole. Bei Verwendung des selbstvernetzenden Bindepulver VINNEX® LL 2321, ein Styrol-Acrylat-Copolymeres, in der Größenordnung von 5 Gew.-% und anschließender thermischer Aktivierung bei ca. 160 °C erhält das vorverfestigte Vlies die notwendige zusätzliche Verbundfestigkeit. Zwar erhöht sich die Steifigkeit des Trägers, dieses ist jedoch für die Anwendung akzeptabel und kann bei speziellen Anforderungen durch weichere Bindepulver angepaßt werden. Das verfestigte Vlies wird im Rakelverfahren mit einer geeigneten Naturkautschuk-Harz-Selbstklebemasse beschichtet, bei 60 °C schonend getrocknet und zu einer Klebebandrolle gewickelt. Ein Abwickeln von der Rolle ist ohne Spalten des Trägers möglich.

### Beispiel 2

Ein Stapelfaservlies aus 100 % Viskosefasern mit einem Flächengewicht von 120 g/m$^2$ wird in einer produktionsüblichen Wasserstrahlverfestigungsanlage vorverfestigt. Die mangelnde Fixierung der Fasern in der Oberfläche wird verbessert, in dem diese einseitig mit einer geeigneten, feinteiligen Acrylatdispersion besprüht wird (Eintrag von ca. 5 bis 10 g/m$^2$). Nach Trocknung wird ein Trägermaterial erhalten, welches nach Beschichtung mit einer Selbstklebemasse gemäß Beispiel 1 ebenso für die Herstellung von Klebebandrollen geeignet ist. Je nach den gewählten Verfahrensparametem (Feststoffgehalt und Viskosität der Bindemitteldispersion, Sprühgeometrie, Verweilzeit zwischen Sprühen und Trocknen) wird eine mehr oberflächliche Beschichtung mit filmähnlicher, aber nicht geschlossener Struktur oder aber merkliches Eindringen des Bindemittels in den Faserverbund erreicht, wobei hierbei der textile Charakter des Trägers stärker erhalten bleibt.

Neben der Verringerung des Faserausrisses beim Abwickeln des Klebebandes ist auch eine tendenzielle Verbesserung der Handeinreißbarkeit festzustellen.

### Patentansprüche

1. Verwendung eines Klebebandes mit einem bandförmigen Träger aus Vliesmaterial, das zumindest einseitig mit einem Kleber beschichtet ist, wobei das Vlies ein Stapelfaservlies darstellt, das durch mechanische Bearbeitung verfestigt oder naßgelegt wird, wobei das Stapelfaservlies durch Zugabe von Bindemitteln weiter verfestigt ist, zum Bandagieren von Kabelbäumen, wie sie insbesondere in der Automobilindustrie eingesetzt werden.

2. Verwnedung nach Anspruch 1, **dadurch gekennzeichnet, daß** als Bindemittel Pulver, Folien, Gitternetze, Bindefasem verwendet werden und/oder die Bindemittel in Wasser oder organischen Lösemittel gelöst sind und/oder als Dispersion vorliegen.

**3.** Verwendung nach Anspruch 2, **dadurch gekennzeichnet, daß** die Bindemittel als Bindedispersion wie Elastomere oder wie Duroplaste in Form von Phenol- oder Melaminharzdispersionen, als Dispersion natürlicher oder synthetischer Kautschuke oder als Dispersion von Thermoplasten wie Acrylate, Vinylacetate, Polyurethane, Styrol-Butadien-Systeme, PVC sowie deren Copolymere vorliegen.

**4.** Verwendung nach den Ansprüchen 1 bis 3, **dadurch gekennzeichnet, daß** die Bindemittel zu 3 % bis 50 %, insbesondere 5 % bis 20 %, bezogen auf das Gewicht des Faservlieses, zugegeben sind.

**5.** Verwendung nach den Ansprüchen 1 bis 4, **dadurch gekennzeichnet, daß** das Vlies die folgenden Eigenschaften aufweist:

- ein Vliesgewicht von 50 bis 500 g/m$^2$, insbesondere 80 bis 200 g/m$^2$,
- eine Vliesdicke von 100 µm bis 3000 µm, insbesondere 200 bis 1000 µm,
- eine Reißkraft von 75 N/(5 cm) bis 500 N/(5 cm), insbesondere 125 N/(5 cm) bis 250 N/(5 cm) und/oder
- eine Reißdehnung von 5 % bis 100 %, insbesondere 15 % bis 70 %.

**6.** Verwendung nach den Ansprüchen 1 bis 5, **dadurch gekennzeichnet, daß** das Vlies einseitig mit einer selbstklebenden Masse beschichtet ist.

**7.** Verwnedung nach den Ansprüchen 1 bis 6, **dadurch gekennzeichnet, daß** die Klebebeschichtung aus einer handelsüblichen druckempfindlichen Klebmasse auf Acrylat- oder Kautschukbasis besteht.

**8.** Verwnedung nach den Ansprüchen 1 bis 7, **dadurch gekennzeichnet, daß** die Rückseite des Vlieses antiadhäsiv behandelt ist.

**9.** Verwendung nach den Ansprüchen 1 bis 8, **dadurch gekennzeichnet, daß** dem Vlies ein oder mehrere Additive wie Pigmente oder UV-Stabilisatoren zugesetzt sind.

**10.** Verwendung nach den Ansprüchen 1 bis 9, **dadurch gekennzeichnet, daß** das Klebeband durch den Zusatz von vorzugsweise Ammoniumpolyphosphat flammfest ausgerüstet ist.

## Claims

**1.** The use of an adhesive tape having a tapelike backing of nonwoven material, which is coated on at least one side with an adhesive, the web being a staple fibre web which is mechanically consolidated or wet-laid, the staple fibre web being consolidated further by the addition of binders, for bandaging cable harnesses as used in particular in the automotive industry.

**2.** The use according to Claim 1, **characterized in that** powders, sheets, meshes or binding fibres are used as binders and/or the binders are present in solution in water or organic solvents and/or as a dispersion.

**3.** The use according to Claim 2, **characterized in that** the binders are present as a binder dispersion such as elastomers or such as thermosets in the form of phenolic or melamine resin dispersions, as a dispersion of natural or synthetic rubbers or as a dispersion of thermoplastics such as acrylates, vinyl acetates, polyurethanes, styrene-butadiene systems, PVC, and copolymers thereof.

**4.** The use according to Claims 1 to 3, **characterized in that** from 3% to 50%, in particular from 5% to 20%, based on the weight of the fibre web, of the binders are added.

**5.** The use according to Claims 1 to 4, **characterized in that** the web has the following properties:

- a web weight of from 50 to 500 g/m$^2$, in particular from 80 to 200 g/m$^2$,
- a web thickness of from 100 to 3000 µm, in particular from 200 to 1000 µm,
- a breaking strength of from 75 to 500 N/(5 cm), in particular from 125 to 250 N/(5 cm) and/or
- a breaking extension of from 5 to 100%, in particular from 15 to 70%.

**6.** The use according to Claims 1 to 5, **characterized in that** the web is coated on one side with a self-adhesive composition.

**7.** The use according to Claims 1 to 6, **characterized in that** the adhesive coating consists of a commercially customary pressure-sensitive adhesive composition based on acrylate or on rubber.

**8.** The use according to Claims 1 to 7, **characterized in that** the reverse of the web has been anti-adhesively treated.

**9.** The use according to Claims 1 to 8, **characterized in that** one or more additives such as pigments or UV stabilizers have been added to the web.

**10.** The use to Claims 1 to 9, **characterized in that** the adhesive tape has been flameproofed by the addition of, preferably, ammonium polyphosphate.

**Revendications**

1. Utilisation d'un ruban adhésif comportant un support en forme de ruban constitué d'un non-tissé, qui est revêtu d'un adhésif sur au moins une face, le non-tissé étant un non-tissé de fibres discontinues, consolidé par traitement mécanique ou déposé par voie humide, où le non-tissé de fibres discontinues est encore consolidé par l'addition de liants, pour l'enveloppement de faisceaux de câbles, comme ceux mis en oeuvre en particulier dans l'industrie automobile.

2. Utilisation selon la revendication 1, **caractérisée en ce que** l'on utilise en tant que liant des poudres, des feuilles, des réseaux tramés, des fibres de liage, et/ou **en ce que** les liants sont dissous dans de l'eau ou dans des solvants organiques et/ou se présentent sous forme de dispersion.

3. Utilisation selon la revendication 2, **caractérisée en ce que** les liants se présentent sous forme de dispersions de liant, comme des élastomères ou des thermoplastiques sous forme de dispersions de résine phénolique ou mélaminique, en dispersion de caoutchoucs naturels ou synthétiques ou en dispersion de thermoplastiques comme des acrylates, de l'acétate de vinyle, du polyuréthanne, des systèmes de styrène - butadiène, du PVC ainsi que leurs copolymères.

4. Utilisation selon les revendications 1 à 3, **caractérisée en ce que** les liants sont à ajouter à raison de 3% à 50%, en particulier de 5% à 20%, par rapport au poids du non-tissé fibreux.

5. Utilisation selon les revendications 1 à 4, **caractérisée en ce que** le non-tissé présente les propriétés suivantes :

   • un poids de non-tissé de 50 à 500 g/m$^2$, en particulier de 80 à 200 g/m$^2$,
   • une épaisseur de non-tissé de 100 à 3000 μm, en particulier de 200 à 1000 μm,
   • une force de rupture de 75 N/ (5 cm) à 500 N/ (5 cm), en particulier de 125 N/(5 cm) à 250 N/ (5 cm), et/ou
   • un allongement à la rupture de 5% à 100%, en particulier de 15% à 70%.

6. Utilisation selon les revendications 1 à 5, **caractérisée en ce que** le non-tissé est revêtu sur une face d'une masse autoadhésive.

7. Utilisation selon les revendications 1 à 6, **caractérisée en ce que** le revêtement adhésif consiste en une masse adhésive du commerce sensible à la pression à base d'acrylate ou de caoutchouc.

8. Utilisation selon les revendications 1 à 7, **caractérisée en ce que** le revers du non-tissé subit un traitement antiadhésif.

9. Utilisation selon les revendications 1 à 8, **caractérisée en ce que** l'on ajoute au non-tissé un ou plusieurs additifs tels que des pigments ou des stabilisants aux UV.

10. Utilisation selon les revendications 1 à 9, **caractérisée en ce que** le ruban adhésif est rendu ininflammable par l'addition, de préférence, de polyphosphate d'ammonium.

Figur 1